# EUROPÄISCHE PATENTSCHRIFT

(11) **EP 3 112 845 B1**
(45) Veröffentlichungstag und Bekanntmachung des Hinweises auf die Patenterteilung: **24.01.2018**
(21) Anmeldenummer: 16159307.4
(22) Anmeldetag: 09.03.2016
(51) Int. Cl.: G01N 21/3504, G01N 21/53, G01N 33/00, G01N 21/33, G01N 21/39, G01N 21/15, G01N 1/22

(54) **VORRICHTUNG ZUR OPTISCHEN IN-SITU ANALYSE EINES MESSGASES**
DEVICE FOR OPTICAL IN SITU ANALYSIS OF A MEASURING GAS
PROCÉDÉ D'ANALYSE OPTIQUE IN SITU D'UN GAZ DE MESURE

(43) Veröffentlichungstag der Anmeldung: 04.01.2017
(73) Patentinhaber: SICK AG, 79183 Waldkirch (DE)
(72) Erfinder: Brüchig, Florian, 79241 Ihringen (DE); Schiffler, Ingo, 79100 Freiburg (DE); Eccardt, Simon, 79353 Bahlingen (DE)

(56) Entgegenhaltungen:
- EP-A1- 1 469 299
- EP-A1- 2 416 145
- WO-A1-2015/193370
- CN-A- 1 414 373
- DE-A1- 19 947 123
- DE-A1-102014 002 087
- JP-A- S60 231 137
- JP-A- 2014 002 072
- US-A1- 2008 168 851

## Beschreibung

Die Erfindung betrifft eine Vorrichtung zur optischen In-Situ Analyse einer Messgaskomponente eines Messgases gemäß dem Oberbegriff des Anspruchs 1.

Mit solchen Vorrichtungen werden bestimmte Gasanteile, z. B. Schwefelwasserstoff, Kohlenmonoxid, SO2, NH3, NO, NO2, HCl, HF oder dergleichen, mittels optischer Transmission oder Lichtstreuung gemessen. Zumeist wird dabei die Konzentration dieser Gasanteile ermittelt. Anwendungsgebiete sind zum Beispiel Emissionsmessungen von Industrieanlagen, bei denen die Abgase auf ihren Gehalt bestimmter molekularer Verbindungen überwacht werden müssen.

Häufig sind die Gasströme, denen die optoelektronische Vorrichtung ausgesetzt ist, um die gewünschten Gasanteile zu messen, durch hohe Partikelbelastungen, wie zum Beispiel Rauch, Stäube, kondensiertes Wasser oder andere Aerosole, gekennzeichnet. Diese hohen Partikelbelastungen verursachen eine große Lichtabsorption und/oder eine hohe Lichtstreuung, die die eigentliche Messung stark behindert bis unmöglich macht. So hat beispielsweise Schwefelwasserstoff eine sehr breite Absorption wie auch ultrafeiner Staub. Es kann dann nicht mehr unterschieden werden, ob die Absorption von Schwefelwasserstoff herrührt oder von dem Staub.

Zum Fernhalten derartiger Partikel, die die Messung stören, ist es bekannt (z.B. US 4,549,080) Filter vorzusehen, die aus einem Rohrstück aus porösem Material bestehen, in dessen Innerem sich die Messstrecke befindet. Aufgrund der porösen Struktur kann zwar das zu messende Gas in die Messstrecke gelangen, aber je nach Porengröße können Partikel, wie Rauch, Stäube oder Aerosole, abgehalten werden. Nachteilig daran ist, dass das Filter aufgrund der Filterwirkung der porösen Struktur einen begrenzten Gasdurchlass aufweist, der einen schnellen Gasaustausch behindert. Ein hoher Gasaustausch wäre wünschenswert, um die an sich geringe Ansprechzeit dieser Geräte zu verbessern.

Andererseits müssen solche in-situ Geräte von Zeit zu Zeit getestet, geprüft bzw. kalibriert werden. Zu diesem Zweck wird ein Prüfgas in die Messstrecke eingebracht, das durch das Filter entweichen kann. Dafür ist ein Filter mit geringem Gasdurchlass wünschenswert, damit für die Dauer der Kalibriermessungen möglichst wenig des teuren Prüfgases entweichen kann.

Diese Anforderungen widersprechen sich und es fehlt eine zufriedenstellende Lösung.

Eine andere Lösung besteht darin, das Messgas extraktiv zu messen, also aus dem Abgaskanal zu extrahieren und in einem entfernten Gasanalysator unter möglichst den gleichen Bedingungen wie im Abgaskanal zu untersuchen. Ein extraktiver Aufbau ist aber sehr aufwändig und erfordert nicht nur zusätzliche Infrastruktur (für die Probenaufbereitung, für den Gastransport, für zusätzliche Heizungen etc.) und Raumbedarf, sondern hat auch den Nachteil, dass die Ansprechzeit sehr langsam ist und die Messung durch die Konditionierung des Transportweges verfälscht wird. Zwar lässt sich die Ansprechzeit verbessern, indem der Ort der Messung möglichst nahe an die Entnahmestelle gebracht wird. Aber dennoch verbleibt eine Strecke für den Transport des Messgases von der Entnahmestelle zum Messort, so dass der Transport sämtliche vorgenannte Infrastruktur benötigt und die Gefahr der Verfälschung weiter besteht.

Aus der US 2008/168851 A1 ist eine Vorrichtung nach dem Oberbegriff des Anspruchs 1 bekannt. Ähnliche Vorrichtungen zeigen JP 2014 002072 A, CN 1 414 373 A, EP 2 419 145 A1, DE 10 2014 002087 A1, DE 199 47 123 A1, EP 1 409 299 A1, JP S60 231137 A und WO 2015/193370 A1.

Ausgehend von diesem Stand der Technik ist es Aufgabe der Erfindung, eine Vorrichtung bereitzustellen, mit der eine verbesserte In-Situ Gasanalyse, insbesondere zur bestmöglichen Vermeidung der vorgenannten Nachteile.

Diese Aufgabe wird gelöst durch eine Vorrichtung mit den Merkmalen des Anspruchs 1.

Die erfindungsgemäße Vorrichtung zur optischen In-Situ Analyse einer Messgaskomponente eines Messgases umfasst einen Gasführungskanal, in dem das Messgas geführt ist, einen Lichtsender zur Aussendung eines Lichtstrahls in eine in dem Gasführungskanal gelegenen Messstrecke, einem Lichtempfänger zum Empfang von Streu- und/oder Transmissionslicht aus der Messstrecke und eine Auswerteeinheit zur Bestimmung von Daten der Messgaskomponente aus der empfangenen Lichtintensität. Erfindungsgemäß ist die Messstrecke in einem gasdichten Gehäuse angeordnet, das wenigstens eine Öffnung zum Gasführungskanal hin aufweist, in der ein Filter angeordnet ist und der Druck ist in dem Gehäuse mit einer Gasfördereinrichtung auf einen Druck gehalten, der geringfügig kleiner ist als der Druck in dem Gasführungskanal, so dass in der Messstrecke das Messgas bei nahezu gleichem Druck wie der in dem Gasführungskanal vorliegt.

Die Erfindung realisiert eine Messzone direkt im Prozess und mit Prozessparametern, insbesondere Temperatur, Druck und Gaszusammensetzung, die nahezu denen, die im Gasführungskanal vorliegen, entsprechen. Gleichzeitig werden aber die störenden Partikel ausgefiltert, wobei die Gasdurchlässigkeit des Filters gering sein kann, so dass seine Filterleistung hoch ist. Denn durch die Gasfördereinrichtung wird das Messgas aktiv durch das Filter in die Messstrecke gefördert, so dass trotz guter Filterwirkung ein ausreichend hoher Gasaustausch möglich ist. Dadurch sind mit der erfindungsgemäßen Vorrichtung die Vorteile der In-Situ Technik, nämlich keine Probenaufbereitung, kein Gastransport über zu konditionierende Strecken, keine oder nur geringe Änderungen der Prozessparameter, erhalten, und zusätzlich wird eine erhebliche Verbesserung der Ansprechzeit durch die aktive Gasförderung durch das Filter erreicht.

Des Weiteren kann die Filterfläche gegenüber herkömmlichen Systemen erheblich reduziert werden, wodurch der Verbrauch an teurem Prüfgas für Kalibrierungen oder Testungen, erheblich reduziert werden kann. Ein weiterer Vorteil ist, dass die Messung mit Prüfgasen unter realen Prozessbedingungen erfolgt und somit genauer und zuverlässiger ist.

Verschmutzungen des Filters können in einfacher Weise durch Regulierung der Förderleistung der Gasfördereinrichtung kompensiert werden. Die Reinigung des Filters kann somit in größeren Zeitintervallen erfolgen.

Um einen bestimmten Entnahmeort für das Messgas aus dem Gasführungskanal zu ermöglichen (häufig wird das in etwa die Mitte des Kanals sein), ist in einer Weiterbildung vorgesehen, dass das gasdichte Gehäuse lanzenartig ausgeführt ist und die Öffnung sich an der Lanzenspitze befindet.

Durch die eine Öffnung des Gehäuses wird das zu messende Gas nur an einem Punkt aus dem Gasführungskanal entnommen und in die Messstrecke geführt. Das ist auf jeden Fall dann unproblematisch, wenn die Komponenten des Messgases gut durchmischt sind und an jedem Ort im Gasführungskanal dieselbe Zusammensetzung vorliegt. In Fällen, in denen das nicht der Fall ist, kann es vorteilhaft sein, wenn mehrere Öffnungen, in denen sich jeweils ein Filter befindet, an unterschiedlichen Stellen im Gehäuse vorgesehen sind, so dass das Gas von verschiedenen Punkten im Gasführungskanal in die Messstrecke gelangt.

Die Montage der erfindungsgemäßen Vorrichtung und die elektrische Anbindung ist erheblich vereinfacht, wenn Lichtsender und Lichtempfänger auf derselben Seite des Gasführungskanals angeordnet sind.

Es kann Applikationsfälle geben, in denen es vorteilhaft ist, wenn Lichtsender und Lichtempfänger auf gegenüberliegenden Seiten des Gasführungskanals angeordnet sind und das Gehäuse mit der Messstrecke quer durch den Gasführungskanal geführt ist. Das ist aber mechanisch aufwändiger.

Insbesondere wenn das Messgas giftige Komponenten enthält, ist es vorteilhaft, wenn das aus der Messstrecke geförderte Gas in den Gasführungskanal zurückgeführt wird.

Nach der Erfindung weist das gasdichte Gehäuse eine Auslassöffnung auf, durch die das zurückgeführte Gas austritt. Die Auslassöffnung ist derart angeordnet, dass in dem Gehäuse anfallendes Kondensat durch die Auslassöffnung gleichzeitig mit dem Gas ausgetragen wird. Diese macht auch Applikationen in gesättigten bzw. nassen Abgasen problemlos möglich, denn die bei der Messung solcher Abgase auftretenden Kondensationen sind dann unproblematisch, dass das Kondensat einfach ablaufen kann, bzw. sogar aktiv mit dem ausgetragenen Gas aus dem Gehäuse heraus gefördert wird.

Damit das Gas nur durch das Filter und die Öffnung in das Gehäuse eintritt und nur durch die Auslassöffnung austritt, weist nach der Erfindung die Öffnung eine Einwegdichtung, die in Richtung des Gehäuseinneren öffnet, auf und die Auslassöffnung eine Einwegdichtung, die in Richtung des Gasführungskanal öffnet, auf.

Dabei ist die Auslassöffnung Teil eines als Ejektor ausgebildeten Auslasses der Gasfördereinrichtung. Dann kann zum Beispiel in einfacher Weise Umgebungsluft über ein Gebläse durch den Ejektor in den Gasführungskanal eingeblasen werden. Durch den Ejektor wird das zu messende Gas dann aus dem Gehäuse mitgefördert, also aus der Auslassöffnung mit in den Kanal geblasen. Durch den entstehenden Unterdruck im Lanzengehäuse wird Messgas durch die Öffnung und den Filter abgesaugt.

Die Kondensatabfuhr kann in Weiterbildung durch eine Ablaufvorrichtung, die das Kondensat zur Auslassöffnung ablaufen lässt, unterstützt werden.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung einer Vorrichtung im Wesentlichen im Querschnitt dargestellt;
- Fig. 2: eine alternative Ausführungsform in einer Darstellung wie Fig. 1;
- Fig. 3: eine weitere Ausführungsform der erfindungsgemäßen Vorrichtung (cross-duct);
- Fig. 4: eine weitere Ausführungsform mit verkürzter Messstrecke;
- Fig. 5: Teile der Vorrichtung in erfindungsgemäßer Ausführungsform mit Auslassöffnung und Kondensatablauf.

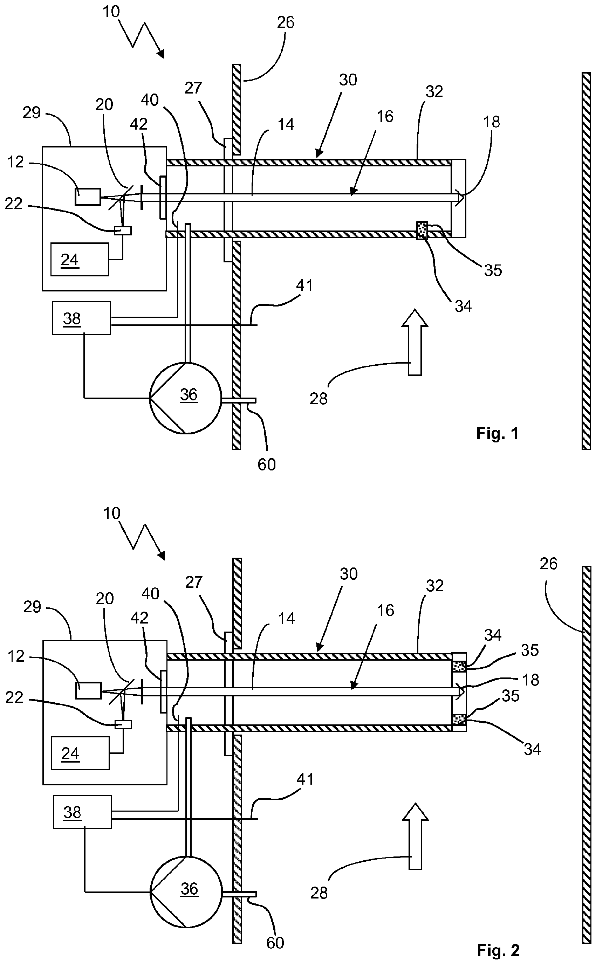

Eine Vorrichtung 10 zur In-Situ Gasanalyse eines Messgasstroms, der durch einen Pfeil 28 angedeutet ist und in einem Gasführungskanal 26 geführt ist, weist in einem in Fig. 1 dargestellten, ersten Ausführungsbeispiel einen Lichtsender 12 auf, der einen Sendelichtstrahl 14 aussendet. Der Lichtsender kann je nach Einsatzzweck als UV- und/oder als IR-Lichtquelle ausgebildet sein. In einer anderen Ausführungsform kann der Licht-sender 12 als durchstimmbarer Laser ausgebildet sein, um die Wellenlänge des Laserlichts über eine Absorption der zu messenden Messgaskomponente durch-stimmen zu können. Der Sendelichtstrahl 14 definiert eine Messstrecke 16 und wird nach Reflexion an einem Retroreflektor 18 und einem Teilerspiegel 20 von einem Lichtempfänger 22 empfangen.

Der Lichtempfänger 22 erzeugt in Abhängigkeit des auftreffenden Lichts elektrische Empfangssignale, die in einer Auswerteeinrichtung 24 ausgewertet werden.

Eine solche Vorrichtung 10 kann beispielsweise als Transmissiometer ausgebildet sein, so dass mit dem Lichtempfänger 22 die Intensität des durch die Messstrecke 16 hindurchtretenden und nicht absorbierten Lichts gemessen wird. In der Regel ist der Lichtsender 12 auf eine bestimmte Wellenlänge abgestimmt bzw. wird über eine Absorptionslinie einer zu untersuchenden Gaskomponente, beispielsweise Schwefelwasserstoff, gescannt. Über die Intensität des am Lichtempfänger 22 empfangenen Lichts kann dann eine Aussage gemacht werden, wie hoch die Konzentration der interessierenden Gaskomponente, z. B. des Schwefelwasserstoffs, in dem Messgasstrom 28 ist.

In einer nicht dargestellten Ausführungsform könnte auch in einer nicht-kollinearen Anordnung von Sende- und Empfangslichtpfad die Erfassung einer Rückwärtsstreuung in bekannter Weise realisiert sein.

Die optoelektronische Vorrichtung 10 umfasst ein außerhalb des Gasführungskanals 26 gelegenes und mittels eines Flansches 27 an dem Gasführungskanal 26 angebrachtes Komponentengehäuse 29. In dem Komponentengehäuse 29 sind die optoelektronischen Komponenten, wie Lichtsender 12, Lichtempfänger 22 und Auswerteeinrichtung 24 angeordnet. Sende- und Empfangslicht treten durch ein Fenster 42 aus dem Komponentengehäuse 29 aus bzw. ein. An das Komponentengehäuse 29 schließt sich ein lanzenartiger Fortsatz 30 an, in dem das Licht geführt ist und in dem sich somit die Messstrecke 16 befindet. Am Ende dieses Fortsatzes 30 ist der Retroreflektor 18 gehalten. Der lanzenartige Fortsatz 30 umfasst ein weiteres Gehäuse 32, das im Folgenden zur Unterscheidung von dem Komponentengehäuse 29 Lanzengehäuse 32 genannt wird. Das Lanzengehäuse 32 ist gasdicht ausgebildet und hat in dem Bereich, in dem es in den Gasführungskanal 26 hineinragt, wenigstens eine Öffnung 34 zum Gasführungskanal 26 hin. In der Öffnung 34 ist ein Filter 35 angeordnet, so dass das Messgas 28 nur durch das Filter 35 in die Messstrecke 16 gelangen kann.

Das Messgas 28 strömt durch die Öffnung 34 und das Filter 35 in das Lanzengehäuse 32 (und nicht umgekehrt), weil an das Lanzengehäuse 32 eine Gasfördereinrichtung 36 angeschlossen ist, die den Druck im Lanzengehäuse 32 geringfügig kleiner hält als der Druck im Gasführungskanal 26. Damit liegt in der Messstrecke 16 das Messgas 28 bei nahezu gleichem Druck, der nur geringfügig kleiner ist als der in dem Gasführungskanal 26, vor. Da das Lanzengehäuse in den Gasführungskanal hineinragt, hat es ebenfalls die im Gasführungskanal vorherrschende Temperatur, so dass in der Messstrecke 16 auch in etwa die gleiche Temperatur vorherrscht. Um den Druck durch Regelung der Förderleistung auf einem gewünschten Niveau konstant zu halten, also geringfügig unterhalb des Drucks im Kanal 26, ist eine Gasfördereinrichtungsregelung 38 vorgesehen, die einerseits über einen Drucksensor 40 den Druck im Lanzengehäuse 32 erfasst und andererseits über einen Drucksensor 41 den Druck in dem Kanal 26, um die Gasfördereinrichtung 36 entsprechend den Regelvorgaben anzusteuern. Über einen Gasauslass 60 kann das aus dem Lanzengehäuse 32 geförderte Gas in den Gasführungskanal 26 abgeführt werden.

Die Fig. 2 zeigt die Möglichkeit, nicht nur eine Öffnung 34 sondern mehrere dieser Öffnungen 34 in dem Lanzengehäuse 32 vorzusehen. In dem Ausführungsbeispiel nach Fig. 2 sind die Öffnungen an der Stirnseite der Lanzenspitze angeordnet. In jeder der Öffnungen 34 ist ein Filter 35 angeordnet. Die Öffnungen 34 mit den Filtern 35 könnten auch über den Bereich der Lanze 30 verteilt angeordnet sein, der in den Kanal 26 hineinragt.

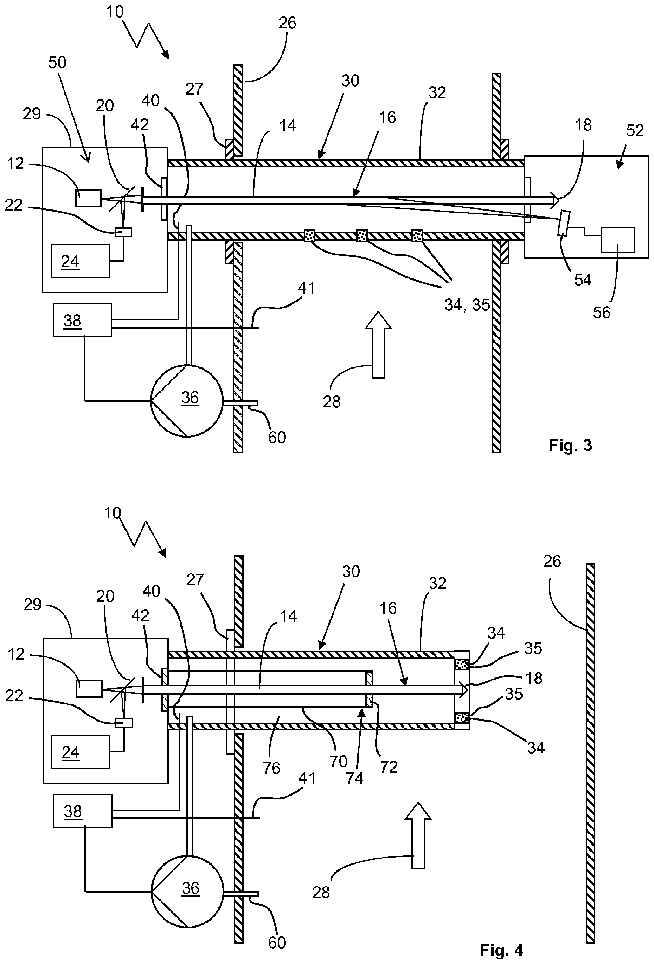

In Fig. 3 ist ein weiteres Ausführungsbeispiel der Vorrichtung 10 dargestellt, bei der die Vorrichtung 10 zweigeteilt ist, und einen ersten Vorrichtungsteil 50 aufweist, der wie der des ersten Ausführungsbeispiels aufgebaut sein kann und einen zweiten Vorrichtungsteil 52, der auf der gegenüberliegenden Seite des Kamins 26 angeordnet ist und in dem beispielsweise der Reflektor 18 angeordnet sein könnte. In diesem zweiten Vorrichtungsteil 52 kann auch ein zweiter Lichtempfänger 54 angeordnet sein, der so angeordnet ist, dass er beispielsweise Vorwärts-Streulicht empfangen kann, so dass mit diesem Messgerät 10 auch nach dem Prinzip der Streulichtmessung eine Konzentrationsauswertung von Gasanteilen vorgenommen werden kann. Das mit dem Empfänger 54 aufgenommene Streulicht wird dazu in einer zweiten Auswerteeinrichtung 56 ausgewertet.

Alternativ könnte für Transmissionsmessungen der erste Empfänger 22 auch in dem zweiten Vorrichtungsteil 52 anstelle des Reflektors 18 angeordnet sein.

Fig. 4 zeigt eine weiteres Ausführungsbeispiel, bei dem im Unterschied zu dem ersten oder zweiten, die Messstrecke 16 verkürzt ist, also sich nicht über die volle Lanzenlänge erstreckt. Die Lanze 30 weist hier ein gasdichtes, koaxial angeordnetes Innenrohr 70 auf, das an seinem reflektorseitigen Ende 72 ein Fenster 74 aufweist, durch das der Lichtstrahl 14 austritt. Die Messstrecke 16 erstreckt sich somit nur von dem Fenster 74 bis zum Reflektor 18. Dies kann sinnvoll sein, denn damit erstreckt sich die Messstrecke 16 nur in dem Bereich der Lanze 30, in dem sich auch die Öffnungen 34 befinden, wodurch genauere Messergebnisse erhalten werden können, denn in diesem Bereich sind die Prozessbedingungen denjenigen im Gasführungskanal 26 am ähnlichsten. Das Messgas wird durch die Öffnungen 34 mit den Filtern 35 durch die Messstrecke 16 und durch einen Zwischenraum 76 zwischen dem weiterem Gehäuse 32 und Innenrohr 70 abgepumpt.

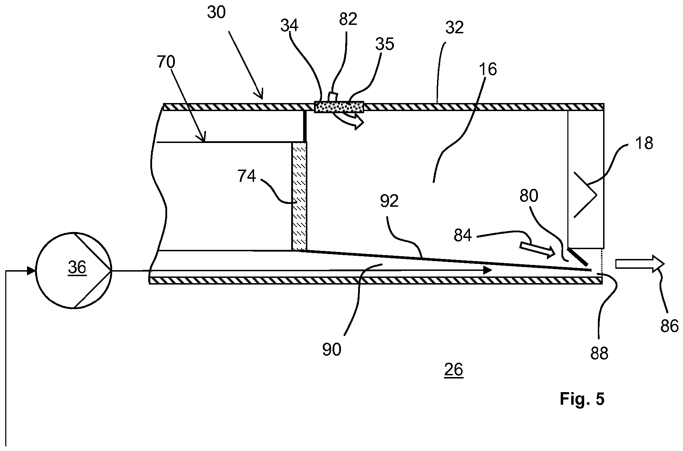

In einer erfindungsgemäßen in Fig. 5 dargestellten Ausführungsform der Vorrichtung weist das Lanzengehäuse 32 eine Auslassöffnung 80 auf, durch die das zurückgeführte Gas austritt. In Fig. 5 ist nicht die gesamte Vorrichtung dargestellt, sondern nur das Lanzengehäuse und die Gasfördereinrichtung 36. Die Auslassöffnung 80 ist am Ende des Lanzengehäuses 32 angeordnet. Das durch die Öffnung 34 und den Filter 35 in die Messstrecke 16 eintretende Gas, was durch den Pfeil 82 angedeutet ist, wird durch die Messstrecke 16 in Richtung der Auslassöffnung 80 gefördert und durch die Auslassöffnung 80 in den Kanal ausgeleitet (Pfeile 84 und 86).

Die Förderung des Messgases von der Öffnung 34 zur Auslassöffnung 80 wird dadurch bewirkt, dass die Auslassöffnung 80 Teil eines als Ejektor ausgebildeten Auslasses 88 der Gasfördereinrichtung 36 ist. Der als Ejektor ausgebildete Auslass 88 am Ende eines Kanals 90 bewirkt somit einen Unterdruck, durch den das Messgas aus der Auslassöffnung 80 abgesaugt wird, was wiederum die Ansaugung von Messgas durch die Öffnung 34 bewirkt. Die Gasfördereinrichtung 36 kann dann als einfaches Gebläse ausgebildet sein, mit dem Umgebungsluft durch den Ejektor 88 in den Gasführungskanal 26 eingeblasen wird.

Zusätzlich wird in dem Lanzengehäuse 30 anfallendes Kondensat durch die Auslassöffnung 80 gleichzeitig mit dem Gas ausgetragen. Des Weiteren ist zur Kondensatabfuhr eine Ablaufvorrichtung 92 vorgesehen, die das Kondensat zur Auslassöffnung 80 ablaufen lässt. Dadurch kann das Kondensat nicht nur einfach ablaufen, sondern wird aktiv mit dem ausgetragenen Gas aus dem Gehäuse herausgesaugt.

## Patentansprüche

1. Vorrichtung zur optischen In-Situ Analyse einer Messgaskomponente eines Messgases (28), die einen Gasführungskanal (26), ein gasdichtes Gehäuse (32) und eine Gasfördereinrichtung (36) umfasst, mit einem Lichtsender (12) zur Aussendung eines Lichtstrahls (14) in eine in dem Gasführungskanal (26) gelegenen Messstrecke (16), einem Lichtempfänger (22) zum Empfang von Streu- und/oder Transmissionslicht aus der Messstrecke (16) und einer Auswerteeinheit (24) zur Bestimmung von Daten der Messgaskomponente aus der empfangenen Lichtintensität, wobei die Messstrecke (16) in dem gasdichten Gehäuse (32) angeordnet ist, das wenigstens eine Öffnung (34) zum Gasführungskanal (26) hin aufweist, in der ein Filter (35) angeordnet ist und wobei der Druck in dem Gehäuse (32) mit der Gasfördereinrichtung (36) auf einen Druck gehalten ist, der geringfügig kleiner ist als der Druck in dem Gasführungskanal (26), so dass in der Messstrecke (16) das Messgas (28) bei nahezu gleichem Druck wie der in dem Gasführungskanal (26) vorliegt, **dadurch gekennzeichnet, dass** die wenigstens eine Öffnung (34) eine Einwegdichtung (94), die in Richtung des Gehäuseinneren öffnet, aufweist und das gasdichte Gehäuse eine Auslassöffnung (80) aufweist, die eine Einwegdichtung (96) aufweist, die in Richtung des Gasführungskanals öffnet und dass durch die Auslassöffnung (80) das zurückgeführte Gas austritt und die Auslassöffnung (80) derart angeordnet ist, dass in dem Gehäuse (32) anfallendes Kondensat durch die Auslassöffnung (80) gleichzeitig mit dem Gas ausgetragen wird, und dass die Auslassöffnung (80) Teil eines als Ejektor ausgebildeten Auslasses (88) der Gasfördereinrichtung (36) ist.

2. Vorrichtung nach Anspruch 1, **dadurch gekennzeichnet, dass** das gasdichte Gehäuse (32) lanzenartig ausgeführt ist und die eine der wenigstens einen Öffnung sich an der Lanzenspitze befindet.

3. Vorrichtung nach einem der vorhergehenden Ansprüche, **dadurch gekennzeichnet, dass** Lichtsender und Lichtempfänger auf derselben Seite des Gasführungskanals angeordnet sind.

4. Vorrichtung nach Anspruch 1 oder 2, **dadurch gekennzeichnet, dass** Lichtsender und Lichtempfänger auf gegenüberliegenden Seiten des Gasführungskanals angeordnet sind und das Gehäuse mit der Messstrecke quer durch den Gasführungskanal geführt ist.

5. Vorrichtung nach einem der vorhergehenden Ansprüche, **dadurch gekennzeichnet, dass** mehrere Öffnungen an unterschiedlichen Stellen im Gehäuse vorgesehen sind.

6. Vorrichtung nach einem der vorhergehenden Ansprüche, **dadurch gekennzeichnet, dass** die Vorrichtung eine Regelung der Förderleistung der Gasfördereinrichtung aufweist zur Regelung des Drucks in dem Gehäuse.

## Claims

1. An apparatus for an optical in-situ analysis of a measurement gas component of a measurement gas (28), said apparatus comprising a gas conducting passage (26), a gas-tight housing (32), and a gas conveying device (36), comprising a light transmitter (12) for transmitting a light beam (14) into a measurement path (16) disposed in the gas conducting passage (26); a light receiver (22) for receiving scattered light and/or transmitted light from the measurement path (16); and an evaluation unit (24) for determining data of the measurement gas component from the received light intensity, wherein the measurement path (16) is arranged in the gas-tight housing (32) that has at least one opening (34) toward the gas conducting passage (26), in which opening a filter (35) is arranged; and wherein the pressure in the housing (32) is held by the gas conveying device (36) at a pressure that is slightly lower than the pressure in the gas conducting passage (26) such that the measurement gas (28) in the measurement path (16) is present at almost the same pressure as that in the gas conducting passage (26), **characterized in that** the at least one opening (34) has a one-way seal (94) that opens in the direction of the housing interior and the gas-tight housing has an outlet opening (80) that has a one-way seal (96) that opens in the direction of the gas conducting passage; and **in that** the returned gas exits through the outlet opening (80) and the outlet opening (80) is arranged such that condensate arising in the housing (32) is simultaneously discharged through the outlet opening (80) with the gas; and **in that** the outlet opening (80) is part of an outlet (88) of the gas conveying device (36) formed as an ejector.

2. An apparatus in accordance with claim 1, **characterized in that** the gas-tight housing (32) is designed in the manner of a lance and the one of the at least one openings is located at the lance tip.

3. An apparatus in accordance with any one of the preceding claims, **characterized in that** the light transmitter and the light receiver are arranged at the same side of the gas conducting passage.

4. An apparatus in accordance with claim 1 or claim 2, **characterized in that** the light transmitter and the light receiver are arranged at oppositely disposed sides of the gas conducting passage and the housing having the measurement path is guided transversely through the gas conducting passage.

5. An apparatus in accordance with any one of the preceding claims, **characterized in that** a plurality of openings are provided at different points in the housing.

6. An apparatus in accordance with any one of the preceding claims, **characterized in that** the apparatus has a regulation of the conveying power of the gas conveying device for regulating the pressure in the housing.

## Revendications

1. Dispositif pour l'analyse optique in situ d'une composante d'un gaz de mesure (28), qui comprend un canal de guidage de gaz (26), un boîtier (32) étanche aux gaz et un moyen de convoyage de gaz (36), comportant un émetteur de lumière (12) pour émettre un faisceau lumineux (14) dans un trajet de mesure (16) situé dans le canal de guidage de gaz (26), un récepteur de lumière (22) pour recevoir de la lumière de diffusion et/ou de transmission depuis le trajet de mesure (16), et une unité d'évaluation (24) pour déterminer des données de la composante du gaz de mesure à partir de l'intensité lumineuse reçue, dans lequel le trajet de mesure (16) est agencé dans le boîtier (32) étanche aux gaz qui présente au moins une ouverture (34) vers le canal de guidage de gaz (26), dans laquelle est agencé un filtre (35), et à l'aide du moyen de convoyage de gaz (36), la pression dans le boîtier (32) est maintenue à une valeur qui est légèrement inférieure à la pression dans le canal de guidage de gaz (26), de sorte que dans le trajet de mesure (16) le gaz de mesure (28) est approximativement à la même pression que celle dans le canal de guidage de gaz (26),
**caractérisé en ce que**
ladite au moins une ouverture (34) comprend un joint d'étanchéité unidirectionnel (94) qui s'ouvre en direction de l'intérieur du boîtier, et le boîtier étanche aux gaz présente une ouverture de sortie (80) qui présente un joint d'étanchéité unidirectionnel (96) qui s'ouvre en direction du canal de guidage de gaz, et **en ce que** le gaz alimenté sort par l'ouverture de sortie (80), et l'ouverture de sortie (80) est agencée de telle sorte que le condensat qui se produit dans le boîtier (32) est expulsé par l'ouverture de sortie (80) simultanément avec le gaz, et **en ce que** l'ouverture de sortie (80) fait partie d'une sortie (88) du moyen de convoyage de gaz (36) qui est réalisée sous forme d'éjecteur.

2. Dispositif selon la revendication 1, dans lequel le boîtier (32) étanche aux gaz est réalisé en forme de lance, et l'une de ladite au moins une ouverture se situe à la pointe de la lance.

3. Dispositif selon l'une des revendications précédentes, **caractérisé en ce que** l'émetteur de lumière et le récepteur de lumière sont agencés sur le même côté du canal de guidage de gaz.

4. Dispositif selon la revendication 1 ou 2, **caractérisé en ce que** l'émetteur de lumière et le récepteur de lumière sont agencés sur des côtés opposés du canal de guidage de gaz et le boîtier avec le trajet de mesure est mené transversalement à travers le canal de guidage de gaz.

5. Dispositif selon l'une des revendications précédentes, **caractérisé en ce que** il est prévu plusieurs ouvertures à des emplacements différents dans le boîtier.

6. Dispositif selon l'une des revendications précédentes, **caractérisé en ce que** le dispositif présente une régulation du débit du moyen de convoyage de gaz en vue de réguler la pression dans le boîtier.
